# EUROPÄISCHE PATENTANMELDUNG

(11) **EP 4 843 395 A1**
(43) Veröffentlichungstag der Anmeldung: **25.11.2026**
(21) Anmeldenummer: 25177267.9
(22) Anmeldetag: 19.05.2025
(51) Int. Cl.: A23G 7/02, A23G 7/00

(54) **VERFAHREN ZUR KÜHLUNG VON NAHRUNGSMITTELPRODUKTEN IN EINEM KÜHLKANAL UND VORRICHTUNG ZUR DURCHFÜHRUNG DES VERFAHRENS**

(71) Anmelder: Sollich KG, 32105 Bad Salzuflen (DE)
(72) Erfinder: Bläsing, Rüdiger, 33613 Bielefeld (DE)
(74) Vertreter: REHBERG HÜPPE + PARTNER

(57) **Zusammenfassung**

Bei einem Verfahren zur Kühlung eines Nahrungsmittelprodukts (2) in einem Kühlkanal (3) mit den Schritten Fördern des Nahrungsmittelprodukts (2) auf einem Förderer (4) durch den Kühlkanal (3), Kühlen (29) des Nahrungsmittelprodukts (2) in dem Kühlkanal (3), Erfassen (31) einer ersten Temperatur T₁ (18) und Einstellen mindestens eines das Kühlen (29) des Nahrungsmittelprodukts (2) beeinflussenden Betriebsparameters des Kühlkanals (3) abhängig von der ersten Temperatur T₁ (18) wird die erste Temperatur T₁ (18) mit einem ersten Infrarotsensor (19) an einer dem Förderer (4) abgekehrten Oberfläche (20) des Nahrungsmittelprodukts (2) erfasst.

## Beschreibung

Die Erfindung bezieht sich auf ein Verfahren zur Kühlung eines Nahrungsmittelprodukts in einem Kühlkanal. Genauer bezieht sich die Erfindung auf ein Verfahren mit den Merkmalen des Oberbegriffs des unabhängigen Patentanspruchs 1. Weiterhin bezieht sich die Erfindung auf eine Vorrichtung zur Durchführung eines solchen Verfahrens mit den Merkmalen des Oberbegriffs des unabhängigen Patentanspruchs 11.

Bei den Nahrungsmittelprodukten kann es sich sowohl um Lebensmittelprodukte für den Verzehr durch Menschen als auch um Tiernahrung handeln. Die Nahrungsmittelprodukte können beispielsweise kontinuierliche Stränge eines gegossenen oder extrudierten Guts sein, das nach dem Kühlen in Portionen unterteilt wird. Ein anderes Beispiel für die zu kühlenden Nahrungsmittelprodukte sind einzelne bereits portionierte und ganz oder teilweise ausgeformte Objekte.

Bei den Nahrungsmittelprodukten handelt es sich vielfach um solche, deren physikalische Eigenschaften stark temperaturabhängig sind, beispielsweise auf Grund Ihres Fett- oder Zuckergehalts. Insbesondere dann kann es für den Erfolg nachfolgender Bearbeitungsschritte entscheidend sein, dass die Nahrungsmittelprodukte auf eine bestimmte Temperatur gebracht werden.

Konkret kann es sich bei den Nahrungsmittelprodukten um Süßwaren handeln.

### STAND DER TECHNIK

Aus der DE 19 917 778 C1 sind ein Verfahren und eine Vorrichtung zum Kühlen von Warenstücken, insbesondere von mit Schokoladenmasse überzogenen Süßwaren bekannt. Die Warenstücke werden auf einem Transportband aufliegend durch einen Kühlkanal gefördert. Während eines Durchlaufs durch den Kühlkanal werden die Warenstücke einem Temperaturprofil ausgesetzt, welches durch ein Kühlmedium, insbesondere Luft, bereitgestellt wird. Das Kühlmedium wird dem Kühlkanal unter Ausbildung von zwei Kühlstrecken im Mittelbereich des Kühlkanals mit je einer Eintrittstemperatur pro Kühlstrecke zugeleitet. Auch bei wechselnder Belastung des Kühlkanals mit Warenstücken, insbesondere bei Produktionsunterbrechungen, werden die Temperaturen des Kühlmediums im Bereich des Eingangs und des Ausgangs des Kühlkanals gemessen und konstant gehalten. Die Menge und damit die Strömungsparameter des Kühlmediums werden im Wesentlichen konstant gehalten, und die Eintrittstemperatur des Kühlmediums jeder Kühlstrecke wird in abhängig von der Belastung des Kühlkanals verändert. Temperaturfühler zur Überwachung der Temperatur des Kühlmediums jeder Kühlstrecke sind im Bereich des Eingangs und Ausgangs des Kühlkanals in dem Raum des Kühlkanals angeordnet, den auch die Warenstücke durchlaufen. Konkret sollen die Temperaturfühler im Luftstrom einer Oberkühlung der beiden Kühlstrecken und/oder im Strom eines flüssigen Kühlmediums einer Bodenkühlung angeordnet sein.

Um dieses bekannte Verfahren und die bekannte Vorrichtung auf bestimmte Warenstücke mit einer bestimmten Eingangstemperaturverteilung für das Erreichen einer bestimmten Ausgangstemperaturverteilung einzustellen, bedarf es erheblicher Erfahrung. Das Verfahren und die Vorrichtung passen die Kühlleistung zwar automatisch an die Belastung des Kühlkanals an. Dies reicht aber vielfach nicht aus, um eine gewünschte Ausgangstemperaturverteilung sicher zu erreichen, selbst wenn das Verfahren und die Vorrichtung bereits grundsätzlich an bestimmte Warenstücke angepasst sind.

Aus der DE 10 2007 062 448 A1 sind ein Verfahren zum Betreiben eines Temperierkanals für Süßwarenstücke mit einem Temperiertunnel und ein entsprechender, insbesondere einer Süßmaschine für Schokolademasse nachgeschalteter Kühlkanal bekannt. Durch den Temperiertunnel wird ein endloses Transportband aus Kunststoff geführt, auf dem die Süßwarenstücke aufliegen, die im Temperiertunnel temperiert werden. Der Temperierkanal weist eine Übernahmestelle für die ankommenden Süßwarenstücke auf. Das Obertrum des Transportbands wird so geheizt und/oder gekühlt, dass das Transportband an der Übernahmestelle eine auf die Süßwarenstücke abgestimmte Temperatur aufweist. Dazu wird die Temperatur des Transportbands im Bereich eines Rücktrums des Transportbands vor der Übernahmestelle mit mindestens einem Sensor gemessen.

Auch dieses bekannte Verfahren und dieser bekannte Kühlkanal bedürfen erheblicher Erfahrung, im sicherzustellen, dass bestimmte Süßwarenstücke mit einer gegebenen Eingangstemperaturverteilung am Ausgang des Temperierkanals eine gewünschte Ausgangstemperaturverteilung aufweisen.

Aus "Berührungslose Temperaturmessung Glasindustrie" siehe https://www.ateg.de/frontend/media/productfilepool/1691479774_Glasindustrie_DE.pdf, abgerufen am 07.04.2025, ist der Einsatz einer Infrarotkamera als Linienscanner für Glasanwendungen bekannt. Mit der Infrarotkamera können Oberflächentemperaturen von sich bewegenden Messobjekten gemessen werden. So können im Produktionsprozess in der Glasindustrie an vielen Stellen Temperaturen erfasst und direkt in die Prozessteuerung übertragen werden. Beispielweise können mehrere Infrarotkameras zur Temperaturkontrolle zwischen aufeinanderfolgenden Kühlbereichen installiert werden, um die Temperatur von Glas zu erfassen, das bei einem Floatglasverfahren nach dem Zinnbad einen Kühlkanal durchläuft.

Aus der CN 216 000 627 U ist eine automatische Gummischneidemaschine bekannt. Die Gummischneidemaschine weist ein Förderband, einen Zuführkanal, eine Luftkühleinrichtung, Infrarotsensoren und eine Abgabepunkt auf. Eine Schneideeinrichtung ist zwischen dem Zuführkanal und dem Förderband angeordnet. Die Infrarotsensoren sind seitlich des Förderbands angeordnet und detektieren, dass Gummiobjekte auf dem Förderband transportiert werden. Auf dieser Basis wird die ungefähre Anzahl der Gummiobjekte auf dem Förderband ermittelt, und die Kühlleistung der Luftkühleinrichtung wird gesteuert, um sie an die aktuellen Erfordernisse anzupassen und dadurch Energie einzusparen.

Zur kontaktlosen Messung der Oberflächentemperatur von Pralinen während deren Herstellung ist die Verwendung von Infrarot-Thermometern bekannt, siehe https://www.pralinenideen.de/shop/811/infrarot-thermometer, abgerufen am 07.04.2025.

### AUFGABE DER ERFINDUNG

Der Erfindung liegt die Aufgabe zugrunde, ein Verfahren mit den Merkmalen des Oberbegriffs des unabhängigen Patentanspruchs 1 und eine Vorrichtung zur Durchführung eines solchen Verfahrens mit den Merkmalen des Oberbegriffs des unabhängigen Patentanspruchs 11 aufzuzeigen, die geeignet sind, ein optimales Einstellen des Verfahrens und der Vorrichtung auf verschiedene Nahrungsmittelprodukte auch ohne große Erfahrung des Anwenders des Verfahrens beziehungsweise des Bedieners der Vorrichtung zu ermöglichen, da erfahrenes Personal durch den zunehmenden Fachkräftemangel immer seltener zur Verfügung steht.

### LÖSUNG

Die Aufgabe der Erfindung wird durch ein Verfahren mit den Merkmalen der unabhängigen Patentanspruchs 1 und eine Vorrichtung mit den Merkmalen des unabhängigen Patentanspruchs 11 gelöst. Bevorzugte Ausführungsformen des erfindungsgemäßen Verfahrens und der erfindungsgemäßen Vorrichtung sind den abhängigen Patentansprüchen definiert.

### BESCHREIBUNG DER ERFINDUNG

Ein erfindungsgemäßes Verfahren zur Kühlung eines Nahrungsmittelprodukts in einem Kühlkanal, das die Schritte Fördern des Nahrungsmittelprodukts auf einem Förderer durch den Kühlkanal, Kühlen des Nahrungsmittelprodukts in dem Kühlkanal, Erfassen einer ersten Temperatur und Einstellen mindestens eines das Kühlen des Nahrungsmittelprodukts beeinflussenden Betriebsparameters des Kühlkanals abhängig von der ersten Temperatur umfasst, ist erfindungsgemäß dadurch gekennzeichnet, dass die erste Temperatur mit einem ersten Infrarotsensor an einer dem Förderer abgekehrten Oberfläche des Nahrungsmittelprodukts erfasst wird. Die mit dem ersten Infrarotsensor erfasste erste Temperatur ist unmittelbar eine solche des Nahrungsmittelprodukts; und diese Temperatur des Nahrungsmittelprodukts wird verwendet, um den Kühlkanal automatisch einzustellen. Die Abhängigkeit, nach der der Kühlkanal abhängig von der ersten Temperatur eingestellt wird, hängt dabei ihrerseits von dem Ort ab, an dem die erste Temperatur mit dem ersten Infrarotsensor längs des Förderers erfasst wird, also insbesondere davon, ob dieses Erfassen im Bereich eines Eingangs, im Bereich eines Ausgangs, in irgendeinem Zwischenbereich des Kühlkanals oder erst mit Abstand hinter dem Ausgang des Kühlkanals erfolgt. Die jeweilige Abhängigkeit kann durch eine bestimmte mathematische Funktion beschrieben werden, deren Argument die erste Temperatur ist und deren Wert der mindestens eine das Kühlen des Nahrungsmittelprodukts beeinflussende Betriebsparameters des Kühlkanals ist. Insbesondere kann die Abhängigkeit des Betriebsparameters des Kühlkanals von der erfassten ersten Temperatur, um ein gewünschtes Ergebnis des Kühlens des Nahrungsmittelprodukts in dem Kühlkanal zu erreichen, aber durch ein angelerntes künstliches neuronales Netzwerk definiert werden. Das Anlernen des künstlichen neuronalen Netzwerks kann mit Hilfe von Temperatur- und Betriebsparameterwerten sowie damit erzielten Ergebnissen des Kühlens erfolgen, die zuvor für den jeweiligen Kühlkanal und das jeweilige Nahrungsmittelprodukt oder ähnliche Nahrungsmittelprodukte ermittelt wurden. Mit Hilfe des angelernten künstlichen neuronalen Netzwerks ist das Verfahren in der Lage, den Betriebsparameter des Kühlkanals autonom zu optimieren.

Die erste Temperatur kann mit dem ersten Infrarotsensor an der dem Förderer abgekehrten Oberfläche des Nahrungsmittelprodukts im Bereich eines Ausgangs des Kühlkanals, das heißt an dem Ausgang oder hinter dem Ausgang des Kühlkanals erfasst werden. Die erste Temperatur an der dem Förderer abkehrten Oberfläche des Nahrungsmittelprodukts beschreibt dann das Ergebnis des Kühlens des Nahrungsmittelprodukt in dem Kühlkanal. Entsprechend bedeutet das Einstellen des mindestens einen das Kühlen des Nahrungsmittelprodukts beeinflussenden Betriebsparameters des Kühlkanals abhängig von der ersten Temperatur eine Regelung des Kühlkanals. Diese Regelung kann insbesondere mit dem Ziel erfolgen, dass durch das Kühlen in dem Kühlkanal eine bestimmte Temperatur an der dem Förderer abgekehrten Oberfläche des Nahrungsmittelprodukts erreicht wird.

Allerdings beschreibt die im Bereich des Ausgangs des Kühlkanals an der dem Förderer abgekehrten Oberfläche des Nahrungsmittelprodukts erfasste erste Temperatur in der Regel nur einen Aspekt des Ergebnisses des Kühlens des Nahrungsmittelprodukts in dem Kühlkanal, weil das Nahrungsmittelprodukt am Ausgang des Kühlkanals in der Regel keine homogene Temperaturverteilung über sein Volumen aufweist. Anders gesagt ist die an dem Förderer abgekehrten Oberfläche des Nahrungsmittelprodukts erfasst erste Temperatur in der Regel nicht die Temperatur im Kern des Nahrungsmittelprodukts und insbesondere auch nicht die mittlere Temperatur des Nahrungsmittelprodukts über sein Volumen.

Wenn bei dem erfindungsgemäßen Verfahren eine zweite Temperatur mit einem zweiten Infrarotsensor an der dem Förderer abgekehrten Oberfläche des Nahrungsmittelprodukts an einem Eingang oder vor einem Eingang des Kühlkanals erfasst wird, wird eine zusätzliche Information zu dem Nahrungsmittelprodukt gewonnen. Auf Basis dieser zusätzlichen Information und der aktuellen Betriebsparameter des Kühlkanals erlaubt die erste Temperatur am Ausgang des Kühlkanals genauere Aussagen über Kühlen des Nahrungsmittelprodukts in dem Kühlkanal. Vor allem aber stellt die zweite Temperatur eine Information über das Nahrungsmittelprodukt vor dem Kühlen bereit und gibt damit vor, auf welchen Wert der mindestens eine oder ein zweiter das Kühlen des Nahrungsmittelprodukts beeinflussender Betriebsparameter des Kühlkanals im Sinne einer Feed Forward-Steuerung automatisch eingestellt werden sollte. Auch hierbei kann die Abhängigkeit des Betriebsparameters von der Temperatur durch eine bestimmte mathematische Funktion oder das angelernte künstliche neuronale Netzwerk vorgegeben werden.

Wenn bei dem erfindungsgemäßen Verfahren mit einem dritten Infrarotsensor eine dritte Temperatur an der dem Förderer abgekehrten Oberfläche des Nahrungsmittelprodukts an einem zwischen seinem Eingang und seinem Ausgang gelegenen Zwischenpunkt des Kühlkanals erfasst wird, wird ein Temperaturprofil der Oberfläche des Nahrungsmittelprodukts über seinen Durchlauf durch den Kühlkanal an einem weiteren Stützpunkt erfasst und somit eine weitere Information über den Verlauf des Kühlens des Nahrungsmittelprodukts in dem Kühlkanal gewonnen. Basierend auf dieser weiteren Information kann der mindestens eine, der zweite oder ein dritter das Kühlen des Nahrungsmittelprodukts beeinflussender Betriebsparameter des Kühlkanals automatisch eingestellt werden. Auch bei diesem automatischen Einstellen kann die Abhängigkeit des Betriebsparameters von der Temperatur durch eine bestimmte mathematische Funktion oder das angelernte künstliche neuronale Netzwerk vorgegeben werden.

In einer Ausführungsform des erfindungsgemäßen Verfahrens wird zusätzlich eine vierte Temperatur mit einem vierten Infrarotsensor an der dem Förderer abgekehrten Oberfläche des Nahrungsmittelprodukt an einem Punkt erfasst, der längs des Förderers mit Abstand hinter einem Punkt des Erfassens der ersten Temperatur liegt. Die vierte Temperatur und insbesondere ein Unterschied der vierten Temperatur zu der ersten Temperatur zeigt an, in wieweit das Nahrungsmittelprodukt in dem Kühlkanal komplett oder bislang nur an seiner Oberfläche abgekühlt wurde. Wenn die Temperatur im Kern des Nahrungsmittelprodukts am Ausgang des Kühlkanals noch sehr viel höher als an seiner dem Förderer abgekehrten Oberfläche ist, wird die Temperatur an der Oberfläche des Nahrungsmittelprodukts hinter dem Kühlkanal durch Wärmediffusion in dem Nahrungsmittelprodukt relativ schnell wieder ansteigen. Entsprechend ist dann die vierte Temperatur höher als die erste Temperatur. Der Temperaturunterschied zwischen der vierten Temperatur und der ersten Temperatur fällt umso kleiner aus, je geringer die Temperaturunterschiede über das Volumen des Nahrungsmittelprodukts am Ausgang des Kühlkanals sind. Die vierte Temperatur liefert somit wertvolle Hinweise über das Ergebnis des Kühlen des Nahrungsmittelprodukts in dem Kühlkanal. Entsprechend kann der mindestens eine, der zweite, der dritte oder ein vierter das Kühlen des Nahrungsmittelprodukts beeinflussender Betriebsparameter des Kühlkanals abhängig von der vierten Temperatur automatisch eingestellt werden, um ein bestimmtes Ergebnis des Kühlens des Nahrungsmittelprodukts in dem Kühlkanal möglichst vollständig zu erreichen. Auch bei diesem automatischen Einstellen kann die Abhängigkeit des Betriebsparameters von der Temperatur durch eine bestimmte mathematische Funktion oder das angelernte künstliche neuronale Netzwerk vorgegeben werden.

Bei dem erfindungsgemäßen Verfahren kann jede Temperatur, das heißt die erste, die zweite, die dritte und/oder die vierte Temperatur, mit dem jeweiligen ersten, zweiten, dritten oder vierten Infrarotsensor als gegenüber einer angrenzenden Fördereroberfläche des Förderers erhöhte Temperatur der dem Förderer abgekehrten Oberfläche des Nahrungsmittelprodukts erfasst werden. Dies kann bedeuten, dass der Infrarotsensor fortlaufend auf die Temperatur der angrenzenden Fördereroberfläche des Förderers als Bezugstemperatur kalibriert wird. Selbst in diesem Fall kann auch eine absolute Temperatur der dem Förderer abgekehrten Oberfläche des Nahrungsmittelprodukts bestimmt werden. Dazu kann beispielsweise die Temperatur des Förderers separat gemessen werden. Vorzugsweise wird mit dem Infrarotsensor jedoch sowohl die absolute Temperatur der angrenzenden Fördereroberfläche des Förderers als auch die absolute Temperatur der dem Förderer abgekehrten Oberfläche des Nahrungsmittelprodukts erfasst, weil auch die absolute Temperatur der Fördereroberfläche des Förderers für eine optimale Einstellung des Kühlkanals, das heißt seiner das Kühlen des Nahrungsmittelprodukts beeinflussende Betriebsparameter von Interesse ist. Mit anderen Worten kann auch die jeweilige Temperatur der angrenzenden Fördereroberfläche des Förderers von dem künstlichen neuronalen Netzwerk in die Einstellung der Betriebsparameter des Kühlkanals einbezogen werden.

Wenn mit dem zweiten Infrarotsensor am Eingang des Kühlkanals für einen vorgegebenen Zeitraum keine gegenüber der Fördereroberfläche des Förderers erhöhte Temperatur einer dem Förderer abgekehrten Oberfläche eines Nahrungsmittelprodukts erfasst wird, kann der Kühlkanal automatisch heruntergefahren werden, um Energie zu sparen. Umgekehrt kann der Kühlkanal dann automatisch hochgefahren werden, wenn mit dem zweiten Infrarotsensor am Eingang des Kühlkanals eine gegenüber der Förderoberfläche des Förderers erhöhte Temperatur einer dem Förderer abgekehrten Oberfläche eines Nahrungsmittelprodukts erfasst wird.

Vorzugsweise wird jede Temperatur mit dem jeweiligen Infrarotsensor als Teil einer Temperaturverteilung über der dem Förderer abgekehrten Oberfläche des Nahrungsmittelprodukts erfasst. Dies bedeutet, dass von dem Nahrungsmittelprodukt mit dem jeweiligen Infrarotsensor ein Wärmebild aufgenommen wird, Als die jeweilige Temperatur kann dann ein Mittelwert der Temperatur über das jeweilige Wärmebild verwendet werden. Die Temperaturverteilung über das jeweilige Wärmebild beinhaltet jedoch noch mehr Informationen als ein einzelner Temperaturwert und beschreibt damit den Zustand des Nahrungsmittelprodukts im Bereich des jeweiligen Infrarotsensors noch genauer. So kann insbesondere am Ausgang des Kühlkanals aus dem jeweiligen Wärmebild des Nahrungsmittelprodukt vielfach bereits geschlossen werden, ob sich im Volumen des Nahrungsmittelprodukts noch heiße Bereiche befinden, weil sich diese in einer höheren Temperatur des Nahrungsmittelprodukts in der Mitte seines Wärmebilds als am Rand seines Wärmebilds zeigen können. Darüber hinaus kann anhand des jeweiligen Wärmebilds des Nahrungsmittelprodukts eine von der aktuellen Temperatur unabhängige Qualitätskontrolle in Bezug auf eine äußere Form und/oder den inneren Aufbau des Nahrungsmittelprodukts durchgeführt werden.

Wie bereits angesprochen wurde, kann jeder das Kühlen des Nahrungsmittelprodukts beeinflussende Betriebsparameter des Kühlkanals, der abhängig von einer der bei dem erfindungsgemäßen Verfahren erfasste Temperaturen automatisch eingestellt wird, gemäß einer Abhängigkeit eingestellt werden, die von dem jeweiligen Lebensmittelprodukt abhängt. Darüber hinaus ist diese Abhängigkeit, die insbesondere durch das angelernte neuronale Netzwerk festgelegt werden kann, vorzugsweise von allen weiteren bei dem erfindungsgemäßen Verfahren erfassten Temperaturen abhängig.

Die das Kühlen des Nahrungsmittelprodukts beeinflussenden Betriebsparameter des Kühlkanals, die bei dem erfindungsgemäßen Verfahren automatisch eingestellt werden können, umfassen insbesondere eine primäre Kühlleistung des Kühlkanals oder zumindest eine primäre Kühlleistung einer von mehreren aufeinander folgenden Untereinheiten des Kühlkanals; eine Kühlfluidtemperatur in dem Kühlkanal oder in zumindest einer von mehreren aufeinander folgenden Untereinheiten des Kühlkanals; eine Kühlfluidumwälzleistung in dem Kühlkanal oder zumindest in einer von mehreren aufeinander folgenden Untereinheiten des Kühlkanals; eine Kühlfluidgeschwindigkeit in den Kühlkanal oder zumindest in einer von mehreren aufeinander folgenden Untereinheiten des Kühlkanals; eine Vorlaufgeschwindigkeit des Förderers durch den Kühlkanal; einer Stellung mindestens eines Kühlfluidleitelements und einen Verlauf eines Kühlprofils über mehrere aufeinander folgende Untereinheiten des Kühlkanals.

Eine erfindungsgemäße Vorrichtung zur Durchführung des erfindungsgemäßen Verfahrens weist einen Kühlkanal, der zum Kühlen eines Nahrungsmittelprodukts ausgebildet ist, einen Förderer der zum Fördern des Nahrungsmittelprodukts durch den Kühlkanal ausgebildet ist, einen Temperatursensor, der zum Erfassen einer ersten Temperatur ausgebildet ist, und eine Steuerung, die zum Einstellen mindestens eines das Kühlen des Nahrungsmittelprodukt in dem Kühlkanal beeinflussenden Betriebsparameters des Kühlkanals abhängig von der mindestens einen Temperatur ausgebildet ist, auf. Erfindungsgemäß ist der Temperatursensor ein erster Infrarotsensor, der zum Erfassen der ersten Temperatur an einer dem Förderer abgekehrten Oberfläche des Nahrungsmittelprodukts angeordnet und ausgebildet ist.

Wie der erste Infrarotsensor und mögliche zweite, dritte und vierte Infrarotsensoren bei der erfindungsgemäßen Vorrichtung vorzugsweise anzuordnen und auszubilden sind, ergibt sich aus der voranstehenden Beschreibung des erfindungsgemäßen Verfahrens. Dies gilt auch für die Ausbildung der Steuerung der erfindungsgemäßen Vorrichtung, die vorzugsweise ein angelerntes neuronales Netzwerk umfasst.

Bei jedem Infrarotsensor kann es sich um einen Zeilensensor handeln, der quer zu der Fördereinrichtung des Förderers durch den Kühlkanal angeordnet ist und dessen Erfassungsbereich vorzugsweise den Förderer über seine gesamte Breite erfasst. Als Zeilensensor kann eine Infrarotkamera eingesetzt werden. Von einer Infrarotkamera können gezielt neue einzelne Zeilen oder Spalten ausgelesen werden, um einen Zeilensensor zu simulieren. Es können aber auch ganze Bilder der Infrarotkamera ausgelesen und zusammengesetzt werden, um ein lückenloses Wärmebild des Förderers mit den aufliegenden Nahrungsmittelprodukten zu erfassen.

Die Steuerung der erfindungsgemäßen Vorrichtung kann insbesondere das künstliche neuronale Netzwerk implementieren, das angelernt ist oder angelernt wird, um das erfindungsgemäße Verfahren umzusetzen. Das künstliche neuronale Netzwerk kann auch ganz konkret dazu angelernt werden, die Temperatur im Kern des Nahrungsmittels anhand der ersten Temperatur und eventuell erfasster weiterer Temperaturen sowie der aktuell eingestellten Betriebsparameter des Kühlkanals zu ermitteln. Der mindestens eine das Kühlen des Nahrungsmittelprodukts beeinflussender Betriebsparameter des Kühlkanals kann dann mit dem Ziel eingestellt werden, dass die Kerntemperatur des Nahrungsmittelprodukts einen vorgegebenen Wert in dem Sinne erreicht, dass die Kerntemperatur nicht mehr höher als der vorgegebene Wert ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer ersten Temperatur die Rede ist, ist dies so zu verstehen, dass genau eine erste Temperatur, zwei erste Temperaturen oder mehr erste Temperaturen erfasst werden. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung einer erfindungsgemäßen Vorrichtung und erläutert zugleich das erfindungsgemäße Verfahren.
- **Fig. 2**: ist ein Ablaufdiagramm zu einer Ausführungsform des erfindungsgemäßen Verfahrens.
- **Fig. 3**: zeigt die Abhängigkeit einer Kerntemperatur eines Nahrungsmittelprodukts von einer Vorlaufgeschwindigkeit, mit der das Nahrungsmittelprodukt durch einen Kühlkanal gefördert wird.
- **Fig. 4**: zeigt die zu Fig. 3 zugehörige Abhängigkeit einer Oberflächentemperatur des Nahrungsmittelprodukts von der Vorlaufgeschwindigkeit durch den Kühlkanal; und
- **Fig. 5**: ist eine schematische Darstellung einer weiteren erfindungsgemäßen Vorrichtung mit Blickrichtung von oben auf einen Förderer, auf dem ein Nahrungsmittelprodukt durch zwei aufeinander folgende Untereinheiten eines Kühlkanals gefördert wird, wobei an verschiedenen Stellen die Temperatur des Nahrungsmittelprodukts mit Infrarotsensoren erfasst wird.

### FIGURENBESCHREIBUNG

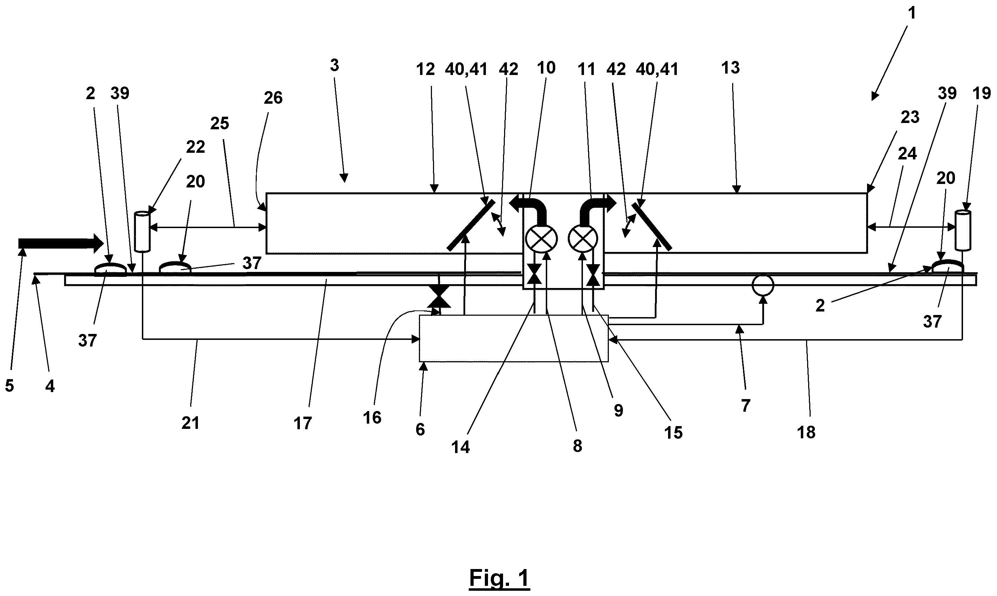

Die in **Fig. 1** schematisch dargestellte Vorrichtung 1 dient zur Kühlung eines Nahrungsmittelprodukts 2 in einem Kühlkanal 3. Das Nahrungsmittelprodukt 2 liegt auf einem Förderer 4 auf und wird auf den Förderer 4 aufliegend in Richtung eines Pfeils 5 durch den Kühlkanal 3 gefördert. Das Nahrungsmittelprodukt 2 ist hier in einzelne, auf dem Förderer 4 untereinander beabstandete Portionen 37 unterteilt. In anderen Ausführungsformen bildet das Nahrungsmittelprodukt 2 einen durchgängigen Teppich auf einer Fördereroberfläche 39 des Förderers 4 aus. Eine Steuerung 6 stellt verschiedene Betriebsparameter des Kühlkanals 3 ein, die das Kühlen des Nahrungsmittelprodukts 2 in dem Kühlkanal 3 beeinflussen. Zu diesen Betriebsparameter zählen eine Vorlaufgeschwindigkeit 7 des Förderers durch den Kühlkanal 3, Kühlfluidgeschwindigkeiten 8 und 9 in hier zwei separat mit Kühlluft 10 beziehungsweise 11 beaufschlagten Untereinheiten 12 und 13 des Kühlkanals 3, Stellungen von Kühlfluidleitelementen 40, hier in Form von Luftklappen 41, die je nach ihren Stellungen in Richtung von Doppelpfeilen 42 die in die Untereinheiten 12 und 13 eingeblasene Kühlluft entweder direkt auf das Nahrungsmittelprodukt 2 oder in einen Oberraum der Untereinheiten 12 und 13 lenken, Kühlfluidtemperaturen 14 und 15 der in die Untereinheiten 12 und 13 eingeblasenen Kühlluft, eine Kühlflüssigkeitstemperatur 16 einer den Förderer 4 von unten kühlenden Kühlflüssigkeit 17 und davon abhängige Kühlfluidumwälzleistungen und primäre Kühlleistungen in den aufeinanderfolgenden Untereinheiten 12 und 13 des Kühlkanals 3. Es kann auch möglich sein, die Kühlflüssigkeitstemperatur 16 für beide Untereinheiten 12 und 13 des Kühlkanals 3 getrennt einzustellen. Die Steuerung 6 stellt die verschiedenen Betriebsparameter abhängig von einer ersten Temperatur 18 ein, die mit einem ersten Infrarotsensor 19 an einer den Förderer 4 abgekehrten Oberfläche 20 des Nahrungsmittelprodukts 2 nach dem Verlassen des Kühlkanals 3 erfasst wird, und anhand einer zweiten Temperatur 21, die mit einem zweiten Infrarotsensor 22 an der dem Förderer 4 abgekehrten Oberfläche 20 des Nahrungsmittelprodukts 2 vor dessen Einlauf in den Kühlkanal 3 erfasst wird. Dabei ist der erste Infrarotsensor 19 nicht unmittelbar an einem Ausgang 23 des Kühlkanals angeordnet, sondern in einem Abstand 24 dahinter, so dass der erste Infrarotsensor 19 die erste Temperatur 18 an der Oberfläche 20 erst dann erfasst, nachdem die Oberfläche 20 für eine gewisse Zeit nicht mehr der Kühlluft 11 in der zweiten Untereinheit 13 des Kühlkanals 3 ausgesetzt war, und die erste Temperatur 18 an der Oberfläche 20 somit näher bei einer Kerntemperatur des Nahrungsmittelprodukts 2 liegt als die Temperatur an der Oberfläche 20 unmittelbar an dem Ausgang 23. Der zweite Infrarotsensor 22 erfasst die zweite Temperatur 21 ebenfalls in einem Abstand 25, hier zu einem Eingang 26 des Kühlkanals 3. Dieser Abstand stellt einerseits sicher, dass die Messung der Temperatur der Oberfläche 20 nicht durch aus dem Eingang 26 des Kühlkanals 3 austretende Kühlluft 10 verfälscht wird. Andererseits ist der Abstand 25 so groß gewählt, dass die Steuerung 6 den Kühlkanal 3 aus einem Stand-by-Modus hochfahren kann, wenn anhand einer gegenüber dem Förderer 4 deutlich erhöhten Temperatur 21 der Oberfläche 20 des Nahrungsmittelprodukts 2 erkannt wird, dass sich ein zu kühlendes Nahrungsmittelprodukt 2 dem Kühlkanal 3 nähert.

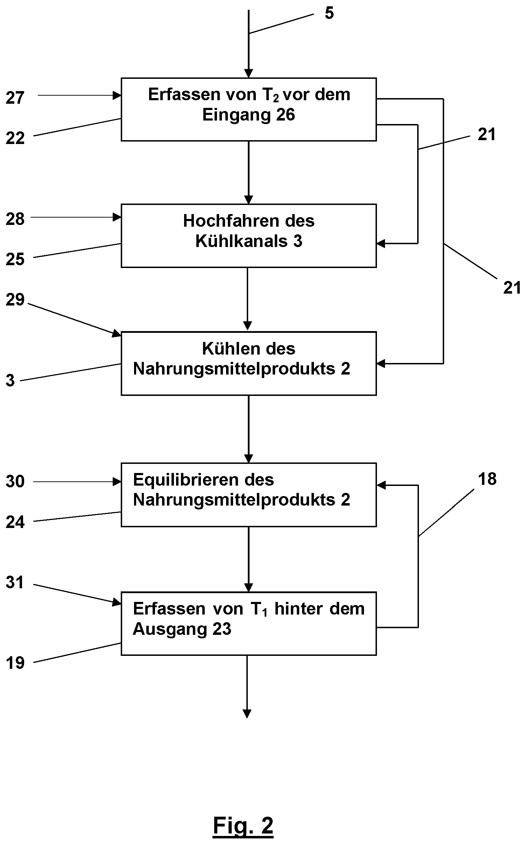

Das Ablaufdiagramm gemäß **Fig. 2** zeigt von oben nach unten in Richtung des Pfeils 5, in der das Nahrungsmittelprodukt 2 gemäß Fig. 1 auf den Förderer 4 gefördert wird, die einzelnen Schritte des erfindungsgemäßen Verfahrens zum Kühlen des Nahrungsmittelprodukts 2 in dem Kühlkanal 3. Mit dem zweiten Infrarotsensor 22 erfolgt ein Erfassen 27 der zweiten Temperatur 21, die hier auch T₂ bezeichnet wird. Abhängig von der zweiten Temperatur 21 erfolgt ein Hochfahren 28 des Kühlkanals 3, und Betriebsparameter des Kühlkanals 3, in dem ein Kühlen 29 des Nahrungsmittelprodukts 2 erfolgt, werden eingestellt. Über den Abstand 24 erfolgt dann ein teilweises Equilibrieren 30 der Temperatur des Nahrungsmittelprodukts 2, bis mit dem ersten Temperatursensor 19 ein Erfassen 31 der ersten Temperatur 18 erfolgt, die hier auch als T₁ bezeichnet wird. Die erste Temperatur 18 dient wie die zweite Temperatur 21 zum Einstellen der Betriebsparameter 3 beim Kühlen 29 des Nahrungsmittelprodukts 2.

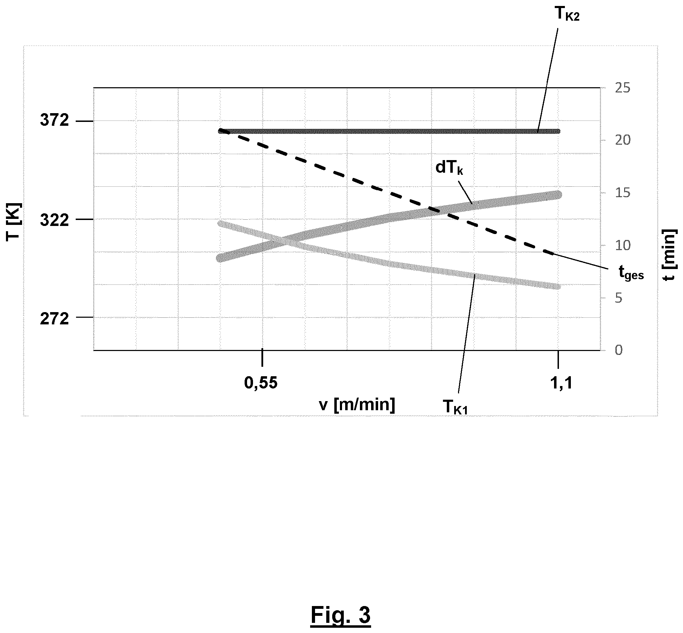

**Fig. 3** ist eine Auftragung einer zweiten Kerntemperatur T_{K2} des Nahrungsmittelprodukts 2 am Eingang 26 des Kühlkanals 3, einer zweiten Kerntemperatur T_{K1} des Nahrungsmittelprodukts 2 am Ausgang 23 des Kühlkanals 3, einer Kühlkanalgesamtaufenthaltsdauer t_{ges} des Nahrungsmittelprodukts 2 in dem Kühlkanal 3 und eines Temperaturabfall dT_{K} der Kerntemperatur über der Vorlaufgeschwindigkeit 7 des Förderers 4, die hier als v bezeichnet ist. Die Kerntemperatur fällt in dem Kühlkanal 3 fällt nach dem newtonschen Abkühlungsgesetz grundsätzlich gemäß einer negativen Exponentialfunktion mit der Kühlkanalgesamtaufenthaltsdauer t_{ges} als Argument ab.

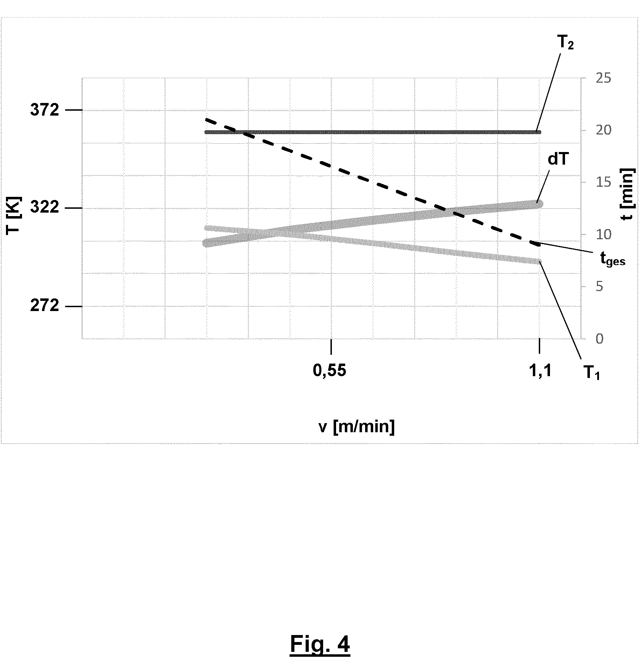

**Fig. 4** zeigt für dasselbe Nahrungsmittelprodukt 2 in einer Fig. 3 entsprechenden Auftragung den Verlauf der mit dem ersten Infrarotsensor 19 gemessenen ersten Temperatur T₁ und eines daraus resultierenden Temperaturabfalls dT gegenüber der mit dem zweiten Infrarotsensor 22 gemessenen zweiten Temperatur T₂ über der Vorlaufgeschwindigkeit v. Die erste Temperatur T₁ weist hier keinen Verlauf einer negativen Exponentialfunktion mit der Kühlkanalgesamtaufenthaltsdauer t_{ges} als Argument auf. Ihr streng monoton fallender Verlauf ist aber so mit dem Verlauf der Kerntemperatur korreliert, dass aus T₁ und T₂ auf T_{K1} geschlossen werden kann. Dies gilt zumindest dann, wenn T_{K1} neben dem bekannten Nahrungsmittelprodukt nur von der zweiten Temperatur T₂ und der Vorlaufgeschwindigkeit v abhängt.

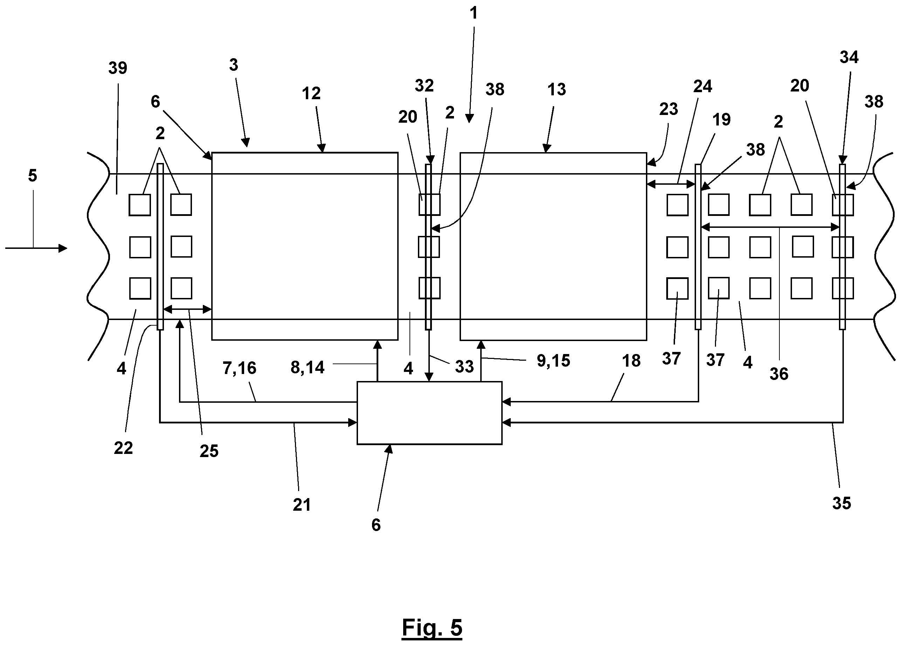

**Fig. 5** zeigt eine Ausführungsform der erfindungsgemäßen Vorrichtung 1, bei der weitere Informationen gewonnen werden, die ein Bestimmen der Kerntemperatur T_{K1} des in dem Kühlkanal gekühlten Nahrungsmittelprodukts 2 auch unter weniger idealen Bedingungen ermöglichen. Dazu wird mit einem dritten Infrarotsensor 32 eine dritte Temperatur 33 der dem Förderer 4 abgekehrten Oberfläche 20 des Nahrungsmittelprodukts 2 zwischen den Untereinheiten 12 und 13 des Kühlkanals 3 erfasst. Darüber hinaus wird mit einem vierten Infrarotsensor 34 eine vierte Temperatur 35 der dem Förderer abgekehrten Oberfläche 20 des Nahrungsmittelprodukts 2 in einem Abstand 36 hinter dem ersten Infrarotsensor 19 erfasst. Über den zusätzlichen Abstand 36 erfolgt ein weiteres Equilibrieren des Nahrungsmittelprodukts 2 bezüglich seiner Temperatur.

Eine gegenüber der ersten Temperatur T₁ 18 noch stark erhöhte Kerntemperatur T_{K1} wird durch einen stärkeren Anstieg der vierten Temperatur 35 gegenüber der ersten Temperatur 18 erkannt. Auch mit der dritten Temperatur 33 werden weitere Informationen über die Entwicklung der Temperatur an der Oberfläche 20 und damit auch in dem Nahrungsmittelprodukt 2 erfasst.

Die einzelnen Infrarotsensoren 19, 22, 32 und 34 sind in Fig. 5 jeweils als Zeilensensoren angedeutet, die eine Temperaturverteilung über die gesamte Breite der Fördereroberfläche 39 erfassen und damit auch eine Temperaturverteilung über die gesamte dem Förderer 4 abgekehrte Oberfläche 20 jeder Portion 37 des Nahrungsmittelprodukts 2. Anhand der Form dieser Temperaturverteilung kann auf das jeweilige Nahrungsmittelprodukt 2 zurückgeschlossen werden beziehungsweise eine Qualitätskontrolle bezüglich der Form der Portionen 37 durchgeführt werden.

### BEZUGSZEICHENLISTE

- 1: Vorrichtung
- 2: Nahrungsmittelprodukt
- 3: Kühlkanal
- 4: Förderer
- 5: Pfeil
- 6: Steuerung
- 7: Vorlaufgeschwindigkeit v
- 8: Kühlfluidgeschwindigkeit
- 9: Kühlfluidgeschwindigkeit
- 10: Kühlluft
- 11: Kühlluft
- 12: Untereinheit des Kühlkanals 3
- 13: Untereinheit des Kühlkanals 3
- 14: Kühlfluidtemperatur der Kühlluft 10
- 15: Kühlfluidtemperatur der Kühlluft 11
- 16: Kühlfluidtemperatur der Kühlflüssigkeit 17
- 17: Kühlflüssigkeit
- 18: erste Temperatur T₁
- 19: erster Infrarotsensor
- 20: dem Förderer 4 abgekehrte Oberfläche des Nahrungsmittelprodukts 2
- 21: zweite Temperatur T₂
- 22: zweiter Infrarotsensor
- 23: Ausgang des Kühlkanals 3
- 24: Abstand
- 25: Abstand
- 26: Eingang des Kühlkanals 3
- 27: Erfassen von T₂
- 28: Hochfahren des Kühlkanals 3
- 29: Kühlen des Nahrungsmittelprodukts 2
- 30: Equilibrieren des Nahrungsmittelprodukts 2
- 31: Erfassen von T₁
- 32: dritter Infrarotsensor
- 33: dritte Temperatur
- 34: vierter Infrarotsensor
- 35: vierte Temperatur
- 36: weiterer Abstand
- 37: Portion des Nahrungsmittelprodukts 2
- 38: Zeilensensor
- 39: Fördereroberfläche des Förderers 4
- 40: Kühlfluidleitelement
- 41: Luftklappe
- 42: Doppelpfeil
- T₁: erste Temperatur 18
- T₂: zweite Temperatur 21
- T_{K1}: Kerntemperatur des Nahrungsmittelprodukts 2 am Ausgang 23 des Kühlkanals 3
- T_{K2}: Kerntemperatur des Nahrungsmittelprodukts 2 am Eingang 26 des Kühlkanals 3
- dT: Temperaturdifferenz zwischen T₁ und T₂
- dTₖ: Temperaturdifferenz zwischen T_{K2} und T_{K1}
- t_{ges}: Gesamtkühlkanalaufenthaltsdauer
- v: Vorlaufgeschwindigkeit 7

## Patentansprüche

1. Verfahren zur Kühlung eines Nahrungsmittelprodukts (2) in einem Kühlkanal (3) mit
- Fördern des Nahrungsmittelprodukts (2) auf einem Förderer (4) durch den Kühlkanal (3),
- Kühlen (29) des Nahrungsmittelprodukts (2) in dem Kühlkanal (3),
- Erfassen (31) einer ersten Temperatur T₁ (18) und
- Einstellen mindestens eines das Kühlen (29) des Nahrungsmittelprodukts (2) beeinflussenden Betriebsparameters des Kühlkanals (3) abhängig von der ersten Temperatur T₁ (18), **dadurch gekennzeichnet, dass** die erste Temperatur T₁ (18) mit einem ersten Infrarotsensor (19) an einer dem Förderer (4) abgekehrten Oberfläche (20) des Nahrungsmittelprodukts (2) erfasst wird.

2. Verfahren nach Anspruch 1, wobei die erste Temperatur T₁ (18) mit dem ersten Infrarotsensor (19) an der dem Förderer (4) abgekehrten Oberfläche (20) des Nahrungsmittelprodukts (2) an einem Ausgang (23) oder hinter einem Ausgang (23) des Kühlkanals (3) erfasst wird.

3. Verfahren nach Anspruch 2, **wobei** eine zweite Temperatur T₂ (21) mit einem zweiten Infrarotsensor (22) an der dem Förderer (4) abgekehrten Oberfläche (20) des Nahrungsmittelprodukts (2) an einem Eingang (26) oder vor einem Eingang (26) des Kühlkanals (3) erfasst wird, wobei der mindestens eine oder ein zweiter das Kühlen (29) des Nahrungsmittelprodukts (2) beeinflussender Betriebsparameters des Kühlkanals (3) abhängig von der zweiten Temperatur T₂ (21) eingestellt wird,

4. Verfahren nach Anspruch 2 oder 3, **wobei** eine dritte Temperatur (33) mit einem dritten Infrarotsensor (32) an der dem Förderer (4) abgekehrten Oberfläche (20) des Nahrungsmittelprodukts (2) an einem zwischen seinem Eingang (26) und seinem Ausgang (23) gelegenen Zwischenpunkt des Kühlkanals (3) erfasst wird, wobei der mindestens eine oder ein dritter das Kühlen (29) des Nahrungsmittelprodukts (2) beeinflussender Betriebsparameters des Kühlkanal (3) abhängig von der dritten Temperatur (33) eingestellt wird.

5. Verfahren nach einem der Ansprüche 2 bis 4, **wobei** eine vierte Temperatur (35) mit einem vierten Infrarotsensor (34) an der dem Förderer (4) abgekehrten Oberfläche (20) des Nahrungsmittelprodukts (2) an einem Punkt erfasst wird, der längs des Förderers (4) mit Abstand (36) hinter einem Punkt des Erfassens der ersten Temperatur T₁ (18) liegt, wobei der mindestens eine oder ein vierter das Kühlen (29) des Nahrungsmittelprodukts (2) beeinflussender Betriebsparameters des Kühlkanal (3) abhängig von der vierten Temperatur (35) eingestellt wird.

6. Verfahren nach einem der vorhergehenden Ansprüche, **wobei** jede Temperatur (18, 21, 33, 35) mit dem jeweiligen Infrarotsensor (19, 22, 32, 34) als gegenüber einer angrenzenden Fördereroberfläche (39) des Förderers (4) erhöhte Temperatur der dem Förderer (4) abgekehrten Oberfläche (20) des Nahrungsmittelprodukts (2) erfasst wird.

7. Verfahren nach Anspruch 6, soweit direkt oder indirekt rückbezogen auf Anspruch 3, **wobei** der Kühlkanal (3)
- heruntergefahren wird, wenn mit dem zweiten Infrarotsensor (22) für einen vorgegebenen Zeitraum keine gegenüber der Fördereroberfläche (39) des Förderers (4) erhöhte zweite Temperatur T₂ (21) einer dem Förderer (4) abgekehrten Oberfläche (20) eines Nahrungsmittelprodukts (2) erfasst wird, und
- hochgefahren wird, wenn mit dem zweiten Infrarotsensor (22) eine gegenüber der Fördereroberfläche (39) des Förderers (4) erhöhte zweite Temperatur T₂ (21) einer dem Förderer (4) abgekehrten Oberfläche (20) eines Nahrungsmittelprodukts (2) erfasst wird.

8. Verfahren nach einem der vorhergehenden Ansprüche, **wobei** jede Temperatur (18, 21, 33, 35) mit dem jeweiligen Infrarotsensor (19, 22, 32, 34) als Teil einer Temperaturverteilung über der dem Förderer (4) abgekehrten Oberfläche (20) des Nahrungsmittelprodukts (2) erfasst wird.

9. Verfahren nach einem der vorhergehenden Ansprüche, **wobei** jeder das Kühlen (29) des Nahrungsmittelprodukts (2) beeinflussende Betriebsparameters des Kühlkanal (3), der abhängig von einer erfassten Temperatur (18, 21, 33, 35) eingestellt wird, gemäß einer Vorgabe eingestellt wird, die von dem jeweiligen Nahrungsmittelprodukt (2) und optional von allen weiteren erfassten Temperaturen (18, 21, 33, 35) abhängig ist.

10. Verfahren nach einem der vorhergehenden Ansprüche, **wobei** jeder das Kühlen (29) des Nahrungsmittelprodukts (2) beeinflussende Betriebsparameters des Kühlkanal (3), der abhängig von einer erfassten Temperatur (18, 21, 33, 35) eingestellt wird, aus
- einer primären Kühlleistung des Kühlkanals (3) oder einer von mehreren aufeinander folgenden Untereinheiten des Kühlkanals (3),
- einer Kühlfluidtemperatur (14, 15, 16) in dem Kühlkanal (3) oder in einer von mehreren aufeinander folgenden Untereinheiten (12, 13) des Kühlkanals (3),
- einer Kühlfluidumwälzleistung (in dem Kühlkanal (3) oder in einer von mehreren aufeinander folgenden Untereinheiten des Kühlkanals (3),
- einer Kühlfluidgeschwindigkeit (8, 9) in dem Kühlkanal (3) oder in einer von mehreren aufeinander folgenden Untereinheiten des Kühlkanals (3),
- einer Vorlaufgeschwindigkeit (7) des Förderers (4) durch den Kühlkanal (3),
- einer Stellung mindestens eines Kühlfluidleitelements (40) und
- einem Verlauf eines Kühlprofils über mehrere aufeinander folgenden Untereinheiten (12, 13) des Kühlkanals (3)
ausgewählt ist.

11. Vorrichtung (1) zur Durchführung des Verfahrens nach einem der vorhergehenden Ansprüche, mit
- eine Kühlkanal (3), der zum Kühlen eines Nahrungsmittelprodukts (2) ausgebildet ist,
- einem Förderer (4), der zum Fördern des Lebensmittprodukts durch den Kühlkanal (3) ausgebildet ist,
- einem Temperatursensor, der zum Erfassen einer ersten Temperatur T₁ (18) ausgebildet ist, und
- einer Steuerung (6), die zum Einstellen mindestens eines das Kühlen (29) des Nahrungsmittelprodukts (2) in dem Kühlkanal (3) beeinflussenden Betriebsparameters des Kühlkanals (3) abhängig von der ersten Temperatur T₁ (18) ausgebildet ist,
**wobei** der Temperatursensor ein erster Infrarotsensor (19) ist, der zum Erfassen der ersten Temperatur T₁ (18) an einer dem Förderer (4) abgekehrten Oberfläche (20) des Nahrungsmittelprodukts (2) angeordnet und ausgebildet ist.

12. Vorrichtung nach Anspruch 11, **wobei** der erste Infrarotsensor (19) an einem Ausgang (23) oder hinter einem Ausgang (23) des Kühlkanals (3) angeordnet ist.

13. Vorrichtung nach Anspruch 11 oder 12, **wobei** ein zweiter Infrarotsensor (22) an einem Eingang (26) oder vor einem Eingang (26) des Kühlkanals (3) angeordnet und ausgebildet ist, um eine zweite Temperatur T₂ (21) an der dem Förderer (4) abgekehrten Oberfläche (20) des Nahrungsmittelprodukts (2) an dem Eingang (26) oder vor dem Eingang (26) des Kühlkanals (3) zu erfassen, wobei die Steuerung (6) ausgebildet ist, um den mindestens einen oder einen zweiten das Kühlen (29) des Nahrungsmittelprodukts (2) beeinflussenden Betriebsparameters des Kühlkanal (3) abhängig von der zweiten Temperatur T₂ (21) einzustellen.

14. Vorrichtung nach Anspruch 12 oder 13,
- **wobei** ein dritter Infrarotsensor (32) an einem zwischen seinem Eingang (26) und seinem Ausgang (23) gelegenen Zwischenpunkt des Kühlkanals (3) angeordnet und ausgebildet ist, um eine dritte Temperatur (33) an der dem Förderer (4) abgekehrten Oberfläche (20) des Nahrungsmittelprodukts (2) an dem Zwischenpunkt zu erfassen, wobei die Steuerung (6) ausgebildet ist, um den mindestens einen oder einen dritten das Kühlen (29) des Nahrungsmittelprodukts (2) beeinflussenden Betriebsparameters des Kühlkanal (3) abhängig von der dritten Temperatur (33) einzustellen, und/oder
- **wobei** ein vierter Infrarotsensor (34) längs des Förderers (4) mit Abstand (36) hinter dem ersten Temperatursensor (19) angeordnet und ausgebildet ist, um eine vierte Temperatur (35) an der dem Förderer (4) abgekehrten Oberfläche (20) des Nahrungsmittelprodukts (2) zu erfassen, wobei die Steuerung ausgebildet ist, um den mindestens einen oder einen vierten das Kühlen (29) des Nahrungsmittelprodukts (2) beeinflussenden Betriebsparameters des Kühlkanal (3) abhängig von der vierten Temperatur (35) einzustellen.

15. Vorrichtung nach einem der Ansprüche 11 bis 14, **wobei** jeder Infrarotsensor (19, 22, 32, 24) ein Zeilensensor (38) oder eine Infrarotkamera ist.

## Geänderte Patentansprüche

### Geänderte Patentansprüche gemäss Regel 137(2) EPÜ.

1. Verfahren zur Kühlung eines Nahrungsmittelprodukts (2) in einem Kühlkanal (3) mit
- Fördern des Nahrungsmittelprodukts (2) auf einem Förderer (4) durch den Kühlkanal (3),
- Kühlen (29) des Nahrungsmittelprodukts (2) in dem Kühlkanal (3),
- Erfassen (31) einer ersten Temperatur T₁ (18) mit einem ersten Infrarotsensor (19) an einer dem Förderer (4) abgekehrten Oberfläche (20) des Nahrungsmittelprodukts (2) an einem Ausgang (23) oder hinter einem Ausgang (23) des Kühlkanals (3), und
- Einstellen mindestens eines das Kühlen (29) des Nahrungsmittelprodukts (2) beeinflussenden Betriebsparameters des Kühlkanals (3) abhängig von der ersten Temperatur T₁ (18), **dadurch gekennzeichnet, dass**
- dass eine dritte Temperatur (33) mit einem dritten Infrarotsensor (32) an der dem Förderer (4) abgekehrten Oberfläche (20) des Nahrungsmittelprodukts (2) an einem zwischen seinem Eingang (26) und seinem Ausgang (23) gelegenen Zwischenpunkt des Kühlkanals (3) erfasst wird, wobei der mindestens eine oder ein dritter das Kühlen (29) des Nahrungsmittelprodukts (2) beeinflussender Betriebsparameters des Kühlkanal (3) abhängig von der dritten Temperatur (33) eingestellt wird, und/oder
- dass eine vierte Temperatur (35) mit einem vierten Infrarotsensor (34) an der dem Förderer (4) abgekehrten Oberfläche (20) des Nahrungsmittelprodukts (2) an einem Punkt erfasst wird, der längs des Förderers (4) mit Abstand (36) hinter einem Punkt des Erfassens der ersten Temperatur T₁ (18) liegt, wobei der mindestens eine oder ein vierter das Kühlen (29) des Nahrungsmittelprodukts (2) beeinflussender Betriebsparameters des Kühlkanal (3) abhängig von der vierten Temperatur (35) eingestellt wird.

2. Verfahren nach Anspruch 1, **wobei** eine zweite Temperatur T₂ (21) mit einem zweiten Infrarotsensor (22) an der dem Förderer (4) abgekehrten Oberfläche (20) des Nahrungsmittelprodukts (2) an einem Eingang (26) oder vor einem Eingang (26) des Kühlkanals (3) erfasst wird, wobei der mindestens eine oder ein zweiter das Kühlen (29) des Nahrungsmittelprodukts (2) beeinflussender Betriebsparameters des Kühlkanals (3) abhängig von der zweiten Temperatur T₂ (21) eingestellt wird,

3. Verfahren nach einem der vorhergehenden Ansprüche, **wobei** jede Temperatur (18, 21, 33, 35) mit dem jeweiligen Infrarotsensor (19, 22, 32, 34) als gegenüber einer angrenzenden Fördereroberfläche (39) des Förderers (4) erhöhte Temperatur der dem Förderer (4) abgekehrten Oberfläche (20) des Nahrungsmittelprodukts (2) erfasst wird.

4. Verfahren nach Anspruch 3, soweit direkt oder indirekt rückbezogen auf Anspruch 2, **wobei** der Kühlkanal (3)
- heruntergefahren wird, wenn mit dem zweiten Infrarotsensor (22) für einen vorgegebenen Zeitraum keine gegenüber der Fördereroberfläche (39) des Förderers (4) erhöhte zweite Temperatur T₂ (21) einer dem Förderer (4) abgekehrten Oberfläche (20) eines Nahrungsmittelprodukts (2) erfasst wird, und
- hochgefahren wird, wenn mit dem zweiten Infrarotsensor (22) eine gegenüber der Fördereroberfläche (39) des Förderers (4) erhöhte zweite Temperatur T₂ (21) einer dem Förderer (4) abgekehrten Oberfläche (20) eines Nahrungsmittelprodukts (2) erfasst wird.

5. Verfahren nach einem der vorhergehenden Ansprüche, **wobei** jede Temperatur (18, 21, 33, 35) mit dem jeweiligen Infrarotsensor (19, 22, 32, 34) als Teil einer Temperaturverteilung über der dem Förderer (4) abgekehrten Oberfläche (20) des Nahrungsmittelprodukts (2) erfasst wird.

6. Verfahren nach einem der vorhergehenden Ansprüche, **wobei** jeder das Kühlen (29) des Nahrungsmittelprodukts (2) beeinflussende Betriebsparameters des Kühlkanal (3), der abhängig von einer erfassten Temperatur (18, 21, 33, 35) eingestellt wird, gemäß einer Vorgabe eingestellt wird, die von dem jeweiligen Nahrungsmittelprodukt (2) und optional von allen weiteren erfassten Temperaturen (18, 21, 33, 35) abhängig ist.

7. Verfahren nach einem der vorhergehenden Ansprüche, **wobei** jeder das Kühlen (29) des Nahrungsmittelprodukts (2) beeinflussende Betriebsparameters des Kühlkanal (3), der abhängig von einer erfassten Temperatur (18, 21, 33, 35) eingestellt wird, aus
- einer primären Kühlleistung des Kühlkanals (3) oder einer von mehreren aufeinander folgenden Untereinheiten des Kühlkanals (3),
- einer Kühlfluidtemperatur (14, 15, 16) in dem Kühlkanal (3) oder in einer von mehreren aufeinander folgenden Untereinheiten (12, 13) des Kühlkanals (3),
- einer Kühlfluidumwälzleistung (in dem Kühlkanal (3) oder in einer von mehreren aufeinander folgenden Untereinheiten des Kühlkanals (3),
- einer Kühlfluidgeschwindigkeit (8, 9) in dem Kühlkanal (3) oder in einer von mehreren aufeinander folgenden Untereinheiten des Kühlkanals (3),
- einer Vorlaufgeschwindigkeit (7) des Förderers (4) durch den Kühlkanal (3),
- einer Stellung mindestens eines Kühlfluidleitelements (40) und
- einem Verlauf eines Kühlprofils über mehrere aufeinander folgenden Untereinheiten (12, 13) des Kühlkanals (3)
ausgewählt ist.

8. Vorrichtung (1) zur Durchführung des Verfahrens nach einem der vorhergehenden Ansprüche, mit
- eine Kühlkanal (3), der zum Kühlen eines Nahrungsmittelprodukts (2) ausgebildet ist,
- einem Förderer (4), der zum Fördern des Lebensmittprodukts durch den Kühlkanal (3) ausgebildet ist,
- einem Temperatursensor, der zum Erfassen einer ersten Temperatur T₁ (18) an einer dem Förderer (4) abgekehrten Oberfläche (20) des Nahrungsmittelprodukts (2) angeordnet und ausgebildet ist, wobei der Temperatursensor ein erster Infrarotsensor (19) ist, der zum Erfassen der ersten Temperatur T₁ (18) an einer dem Förderer (4) abgekehrten Oberfläche (20) des Nahrungsmittelprodukts (2) angeordnet und ausgebildet ist und der an einem Ausgang (23) oder hinter einem Ausgang (23) des Kühlkanals (3) angeordnet, und
- einer Steuerung (6), die zum Einstellen mindestens eines das Kühlen (29) des Nahrungsmittelprodukts (2) in dem Kühlkanal (3) beeinflussenden Betriebsparameters des Kühlkanals (3) abhängig von der ersten Temperatur T₁ (18) ausgebildet ist,
**dadurch gekennzeichnet, dass**
- dass ein dritter Infrarotsensor (32) an einem zwischen seinem Eingang (26) und seinem Ausgang (23) gelegenen Zwischenpunkt des Kühlkanals (3) angeordnet und ausgebildet ist, um eine dritte Temperatur (33) an der dem Förderer (4) abgekehrten Oberfläche (20) des Nahrungsmittelprodukts (2) an dem Zwischenpunkt zu erfassen, wobei die Steuerung (6) ausgebildet ist, um den mindestens einen oder einen dritten das Kühlen (29) des Nahrungsmittelprodukts (2) beeinflussenden Betriebsparameters des Kühlkanal (3) abhängig von der dritten Temperatur (33) einzustellen, und/oder
- dass ein vierter Infrarotsensor (34) längs des Förderers (4) mit Abstand (36) hinter dem ersten Temperatursensor (19) angeordnet und ausgebildet ist, um eine vierte Temperatur (35) an der dem Förderer (4) abgekehrten Oberfläche (20) des Nahrungsmittelprodukts (2) zu erfassen, wobei die Steuerung ausgebildet ist, um den mindestens einen oder einen vierten das Kühlen (29) des Nahrungsmittelprodukts (2) beeinflussenden Betriebsparameters des Kühlkanal (3) abhängig von der vierten Temperatur (35) einzustellen.

9. Vorrichtung nach Anspruch 8, **wobei** ein zweiter Infrarotsensor (22) an einem Eingang (26) oder vor einem Eingang (26) des Kühlkanals (3) angeordnet und ausgebildet ist, um eine zweite Temperatur T₂ (21) an der dem Förderer (4) abgekehrten Oberfläche (20) des Nahrungsmittelprodukts (2) an dem Eingang (26) oder vor dem Eingang (26) des Kühlkanals (3) zu erfassen, wobei die Steuerung (6) ausgebildet ist, um den mindestens einen oder einen zweiten das Kühlen (29) des Nahrungsmittelprodukts (2) beeinflussenden Betriebsparameters des Kühlkanal (3) abhängig von der zweiten Temperatur T₂ (21) einzustellen.

10. Vorrichtung nach Anspruch 8 oder 9, wobei jeder Infrarotsensor (19, 22, 32, 24) ein Zeilensensor (38) oder eine Infrarotkamera ist.
